# EUROPEAN PATENT SPECIFICATION

(11) **EP 1 923 611 B1**
(45) Date of publication and mention of the grant of the patent: **02.03.2011**
(21) Application number: 06425759.5
(22) Date of filing: 09.11.2006
(51) Int. Cl.: F16K 5/06

(54) **Ball valve**
Kugelventil
Robinet à boisseau sphérique

(43) Date of publication of application: 21.05.2008
(73) Proprietor: F.I.P. Formatura Iniezione Polimeri S.p.A, 16015 Casella (Genova) (IT)
(72) Inventor: Mazzacano, Corrado c/o F.I.P. Formatura Iniezione Polimeri S.p.A., 16015 Casella (Genova) (IT); Bisio Andrea c/o F.I.P. Formatura Iniezione Polimeri S.p.A., 16015 Casella (Genova) (IT)
(74) Representative: Leihkauf, Steffen Falk

(56) References cited:
- EP-A- 1 386 713
- WO-A-00/11381
- FR-A1- 2 487 944
- GB-A- 2 199 119
- US-A- 4 257 575
- US-A- 5 505 428
- US-A- 5 639 394

## Description

The object of the present invention is a ball valve for controlling the fluid flow in hydraulic systems. It is further an object of the present invention a ball for this ball valve.

A known ball valve comprises a valve body enclosing a drilled or bored ball and sealing elements placed in contact with the ball. The ball is pivoted about an axis perpendicular to the hole axis and to the duct axis. The control, which is placed outside the valve body, allows rotating the ball and making the hole axis to coincide with the duct axis, or alternatively, arranging the latter in the direction perpendicular thereto.

When the hole axis is arranged along the duct axis, the highest flow rate of the hydraulic flow is allowed. On the other hand, when the hole axis is arranged perpendicular to the duct axis, the hydraulic flow is prevented. The intermediate positions allow adjusting, within a certain range, the flow rate.

From what has been said above, those skilled in the art can promptly appreciate the importance of the sealing between the outer surface of the ball and the sealing elements.

Ball valves are known to be made of plastic material. These valves are widely appreciated for uses in which the valve body and ball are placed in contact for example with chemically aggressive fluids.

The manufacture of this type of ball valves must necessarily take into account the considerable amount of shrinkage to which polymers are subjected after hot-moulding.

For this reason, the "balls" manufactured by means of hot-moulding are known to be inevitably irregularly shaped and thus intended for use in low-performing valves.

Alternatively, for high-performing valves, a semifinished product is known to be manufactured by means of hot-moulding, which is only approximatively ball-like, from which a regular ball can be obtained by means of a tooling machine after the shape has been stabilized.

This manufacture of the valve thus entails high costs, which are mainly related to labour and machining time required for manufacturing the ball.

GB 2 199 119 and US 5,639,394 disclose two examples of known ball valve assemblies.

The object of the present invention is to provide a ball valve having such structural and functional characteristics as to overcome said drawbacks cited with reference to the prior art.

Particularly, the task of the present invention is to provide a ball valve and a valve made of polymeric material, which allow reducing the manufacturing time and cost.

This object and this task are achieved, respectively, by a ball in accordance with claim 1, and by a ball valve in accordance with claim 11.

The dependent claims relate to further aspects or embodiments of the present invention.

Further characteristics and advantages of the ball valve and components thereof according to the invention will be understood from the description given below of a preferred exemplary embodiment thereof, which is given as non-limiting indication, with reference to the attached figures, in which:

Fig. 1 illustrates an overall perspective and partially sectional view of a ball valve according to the invention in a first configuration;

Fig. 2 illustrates an overall perspective and partially sectional view of a ball valve in Fig. 1 in a second configuration;

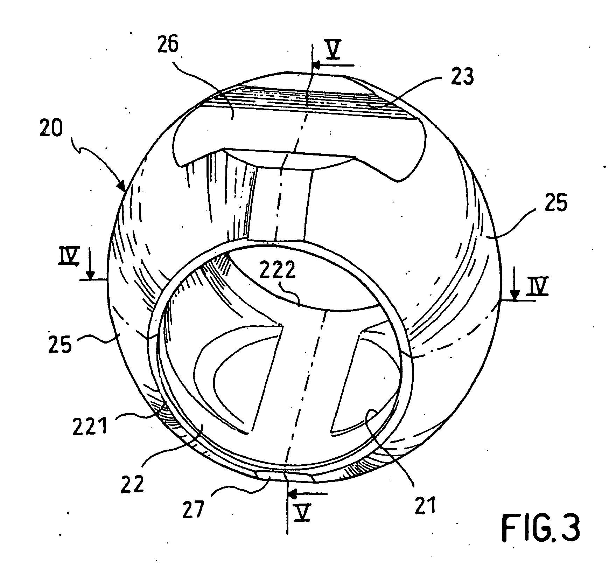

Fig. 3 illustrates an overall perspective sectional view of a ball according to the invention;

Fig. 4 illustrates a ball according to the invention being sectioned along the line IV-IV in Fig. 3;

Fig. 5 illustrates a ball according to the invention being sectioned along the line V-V in Fig. 3;

Fig. 6 illustrates the section of a mould for manufacturing a ball according to the invention in a first configuration;

Fig. 7 illustrates the section of the mould in Fig. 6 in a second configuration;

Fig. 8 illustrates the section of the mould in Fig. 6 in a third configuration.

With reference to said figures, 1 generally designates a ball valve according to the invention, which is suitable for controlling the flow in hydraulic systems, and the like.

In accordance with the embodiment as shown in the annexed figures, the ball valve 1 comprises a valve body 10, a ball 20 and a control 30.

The valve body 10 and the ball 20 are made of polymeric material.

The valve body 10 comprises, as known per se, means 11 for the connection to a hydraulic system, and a turret 13 for housing the control 30.

The valve body 10 defines an axis Z, which coincides with the local axis of the hydraulic system.

The control 30 comprises, in a manner also known per se, a shaft 31 and an outer actuator (not shown in the annexed figures), which can comprise a lever, a handle, a wheel or an electro-mechanical actuator. The shaft 31 rotates about an axis Y'.

The valve body 10 further comprises sealing elements 12 that are suitable to come in contact with the outer surface of the ball 20 and ensure the sealing of valve 1.

The ball 20 comprises, in a manner known per se, a through hole 21, which defines a duct 22 that is suitable for, when required, being passed through by the flow provided within the hydraulic system. The through hole 21 has a first end opening 221 and a second end opening 222 and defines an axis X.

In accordance with the preferred embodiment, the ball 20 also comprises a notch 23 for the operative coupling with the control 30, such as with the shaft 31.

The provision of the notch 23 allows defining the axis Y of the ball 20 as the axis perpendicular to the axis X and passing through the center of notch 23. When the valve 1 is properly mounted, the axis Y' of the shaft 31 coincides with the axis Y of ball 20. The axis Y is that about which the ball is intended to rotate during the normal operation of the valve 1.

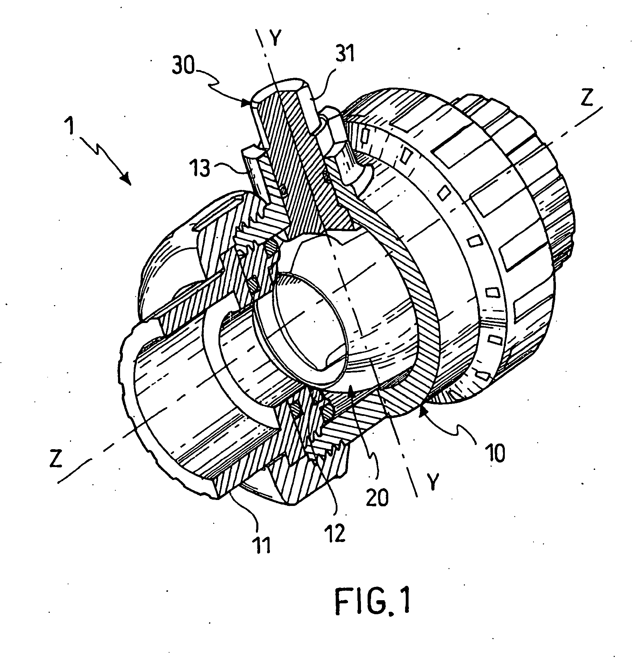

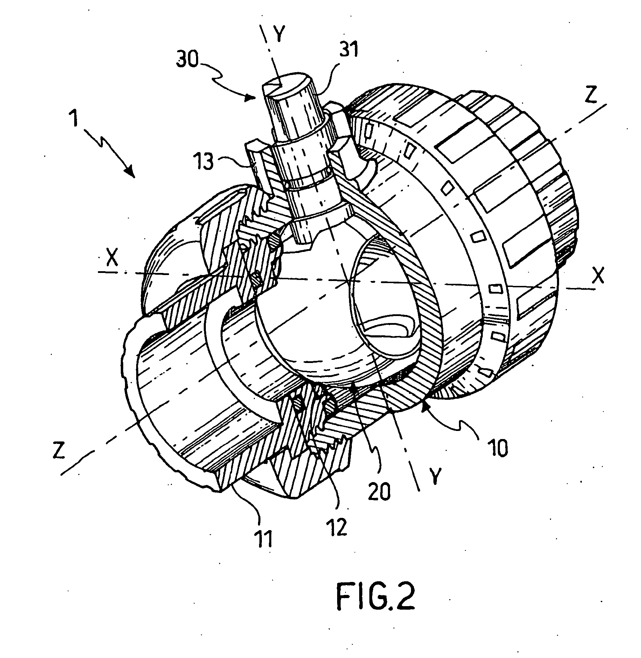

In Fig. 1, the axis X of the hole 21 coincides with the axis Z of the valve body 10 and consequently the valve 1 is open. In Fig. 2, the axis X of the hole 21 is perpendicular to the axis Z of the valve body 10 and consequently the valve 1 is closed.

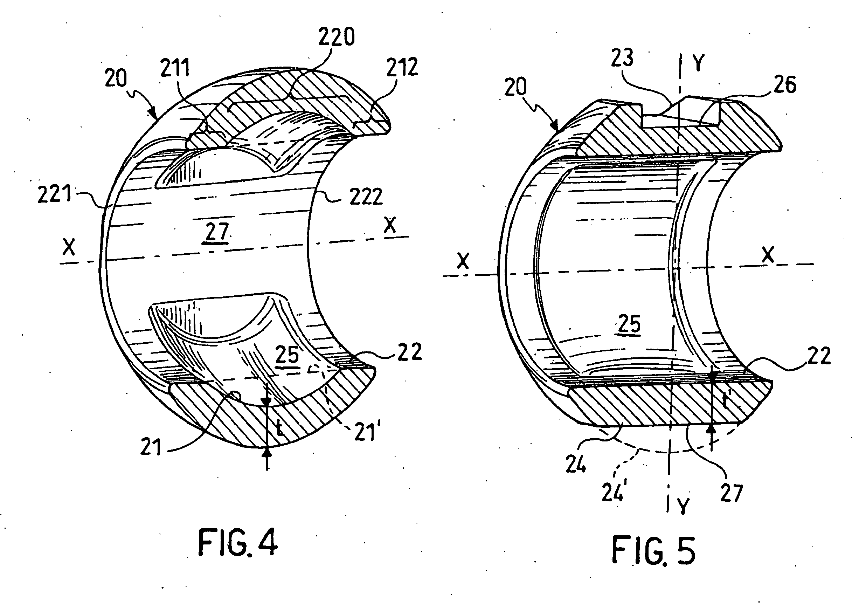

In accordance with the embodiment, the ball 20 comprises a flat surface 24 in the area diametrally opposite the notch 23. In other words, to complete the outer profile of the ball 20, in the area of the flat surface 24, there lacks a cap 24' indicated with a dotted line in Fig. 5.

In the ball 20 according to the invention, the through hole 21 has a varying section along the axis X.

Particularly, in the embodiment in Fig. 4, the section of the through hole 21 has a short tract 211, which is constant proximate to the first end opening 221, then increasing towards the center of the duct 22, and finally decreasing towards the second end opening 222 where, it has another short constant tract 212.

Particularly, in the embodiment in Fig. 4, the section of through hole 21 defines, in the middle area and excluding the two constant tracts 211 and 212, an arc of circle 220.

In accordance with the embodiment shown in the annexed figures, the section of hole 21 changes in the direction perpendicular both to axis X and axis Y (well visible in Fig. 4), while it is constant in the direction perpendicular to the axis X and parallel to the axis Y (well visible in Fig. 5).

The inner profile of a hole 21' of a known type is drawn in Fig. 4 for facilitating a comparison with the hole 21 according to the invention, and in order to better appreciate the difference between them.

As may be seen particularly in Fig. 4, the varying section of hole 21 according to the invention allows obtaining a reduction in the volume of the polymer required for making the ball 20. There results a reduction in the shrinkage occurring at the end of the hot moulding of the polymer composing the ball 20.

Furthermore, due to the arc-of-circle-shaped profile 220 as described above, the ball 20 consists of two half-shells 25 having a constant thickness t, except only for those areas proximate to the end openings 221 and 222 of hole 21.

In accordance with the embodiment, the thickness t of the half-shells 25 is equal to the thickness t' of the wall dividing the duct 22 from the flat surface 24.

In accordance with the embodiment, the ball 20 consists of two half-shells 25 that are made lightener therein and connected by two bridge areas 26 and 27. The first bridge area 26 externally comprises the notch 23. The second bridge area 27 externally comprises the flat surface 24.

Preferably, the two half-shells 25 have a double curvature therein, whereas the bridge areas 26 and 27 have a single curvature therein.

As those skilled in the art may immediately appreciate from what has been stated above, the constant thickness t of the half-shells 25 forming the ball implies an even shrinkage of the polymer after moulding. Thereby, the shape given to the ball 20 during the moulding step will be maintained in the finished piece, except for a reduction in the size thereof, which is known and can be calculated.

In other words, the final definition of the outer surface of the ball 20 is directly carried out while the polymer is being moulded and does not require any further tooling.

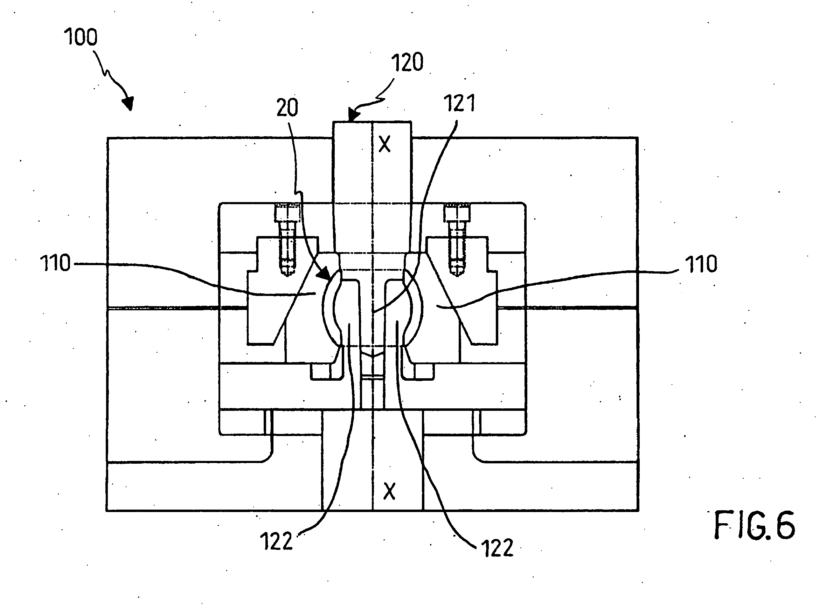

With reference to Fig. 6 to 8, the mould and method for manufacturing the ball 20 according to the invention will be briefly described herein below.

As may be seen in Fig. 6 to 8, the mould 100 comprises two shells 110 that are shaped such as to create a cavity having the shape of the ball 20. The mould 100 further comprises a core 120 suitable to form the hole 21. The core 120 is comprised of three pieces: an upper wedge 121 and two lower matrixes 122.

In the configuration as shown in Fig. 6, the mould 100 is completely closed, and particularly it has just received the molten polymer injection to form the ball 20.

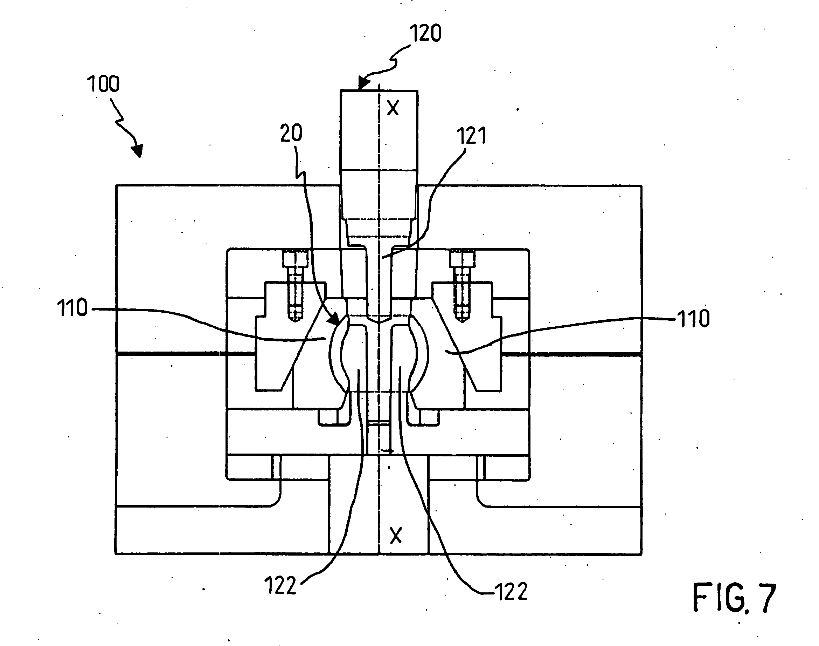

In the configuration as shown in Fig. 7, the polymer is at least partially cured and the mould 100 is partially open. Particularly, the wedge 121 is lifted to allow the matrixes 122 to move to each other.

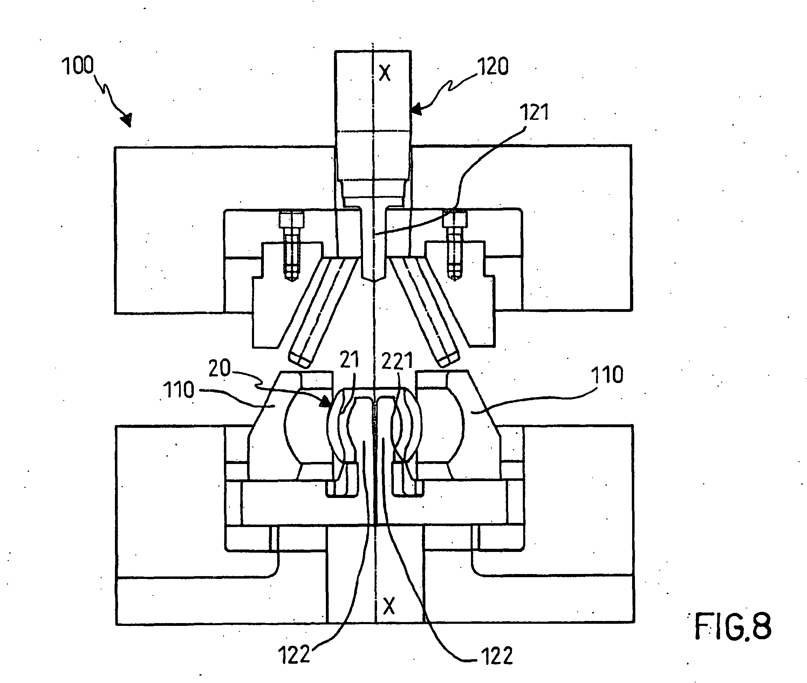

In the configuration as shown in Fig. 8, the polymer is cured and the mould 100 is completely open to release the ball 20. Particularly, the matrixes 122 are moved to each other to be allowed to pass through the end opening 221 of hole 21 of the ball 20. The upper part of the mould 100 is lifted, such as to separate the shells 110 from each other.

As those skilled in the art may appreciate from what has been described above, the mould 100 and particularly the composite core 120 allow obtaining the undercut required to give the profile to the section of hole 21 as desired.

To the preferred embodiments of the ball and ball valve as described above, those skilled in the art, aiming at satisfying contingent and specific needs, may carry out a number of modifications, adaptations and replacements of elements with others functionally equivalent, without however departing from the scope of the claims below.

## Claims

1. A ball (20) for a ball valve (1) for controlling the fluid flow in hydraulic systems, said ball being made of a polymeric material and comprising a through hole (21) defining a duct (22) for said flow and defining an axis X, **characterized in that** said through hole (21) has a section varying along the axis X,
wherein:
- said ball (20) is moulded in a single piece having two half-shells (25) that are made lightener therein and connected to each other in two diametrally opposite bridge areas (26, 27) and having a constant thickness t, except only for those areas proximate to the end openings (221, 222) of the hole (21),
- a first bridge area (26) of said bridge areas (26, 27) externally comprises a notch (23) for the operative coupling with a control (30) and
- a second bridge area (27) of said bridge areas (26, 27) externally comprises a flat surface (24) diametrally opposite the external notch (23),
wherein the thickness t of the half-shells (25) is substantially equal to the thickness t' of the wall dividing the duct (22) from the flat surface (24).

2. The ball (20) in accordance with claim 1, wherein the hole (21) has a first end opening (221) and a second end opening (222).

3. The ball (20) in accordance with claim 2, wherein the section of the through hole (21) has a short tract (211), which is constant proximate to the first end opening (221), then increasing towards the center of the duct (22), and finally decreasing towards then second end opening (222), where it has another short constant tract (212).

4. The ball (20) in accordance with claim 2 or 3, wherein the section of the through hole (21) defines, in the central area thereof, and excluding the two short constant tracts (211, 212), an arc of circle (220).

5. The ball (20) in accordance with any one of the preceding claims, further comprising an axis Y perpendicular to the axis X of the hole (21) and passing through the center of notch (23).

6. The ball (20) in accordance with the preceding claim, wherein the section of the hole (21) changes in the direction perpendicular both to the axis X and axis Y.

7. The ball (20) in accordance to claim 5 or 6, wherein the section of the hole (21) is constant in the direction perpendicular to the axis X and parallel to the axis Y.

8. The ball (20) according to any preceding claim, wherein the two half-shells (25) have a double curvature therein.

9. The ball (20) according to any preceding claim, wherein the, bridge areas (26, 27) have a single curvature therein.

10. The ball (20) according to any preceding claim, wherein the final definition of the outer surface of the ball (20) is directly carried out while the polymer is being moulded and does not require any further tooling.

11. A ball valve (1) for controlling the fluid flow in hydraulic systems, comprising a ball (20) according to any preceding claim.

12. The ball valve (1) in accordance with the preceding claim comprising a valve body (10) and a control (30).

13. The ball valve (1) in accordance with claim 12, wherein said valve body (10) is made of a polymeric material.

14. The ball valve (1) in accordance with claim 12 or 13. wherein said valve body (10) comprises means (11) for the convection with a hydraulic system.

15. The ball valve (1) in accordance with any claim. 12 to 14, wherein said valve body (10) comprises a turret (13) for housing the control (30).

16. The ball valve (1) in accordance with claim 12, wherein the control (30) comprises a shaft (31) pivoting about an axis Y'.

17. The ball valve (1) in accordance with the preceding claim, wherein the axis Y' of the shaft (31) coincides with the axis X of the ball (20).

18. The ball valve (1) in accordance with claim 12, wherein the control (30) comprises an external actuator selected from the group comprising a lever, a. handle, a wheel and an electromechanical actuator.

19. The ball valve (1) in accordance with any claim 12 to 18 wherein the valve body (10) further' comprises sealing elements (12) that are suitable for contacting the outer surface of the ball (20) and ensuring the sealing of the valve (1).

## Patentansprüche

1. Kugel (20) für ein Kugelventil (1) zum Steuern der Flüssigkeitsströmung in hydraulischen Systemen, welche Kugel aus einem polymeren Material besteht und eine einen Kanal (22) für die Strömung bildende und eine X-Achse festlegende Durchgangsöffnung (21) aufweist, **dadurch gekennzeichnet, dass** die Durchgangsöffnung (21) einen sich entlang der X-Achse ändernden Schnitt hat,
wobei:
- der Ball (20) als ein einziges Stück mit zwei in zwei diametral gegenüberliegenden Brückenbereichen (26, 27) verbundenen Halbschalen (25), die dabei leichter ausgeführt sind, und mit einer außer in diesen Bereichen nahe den endseitigen Öffnungen (221, 222) der Durchgangsöffnung (21) konstanten Dicke t geformt ist.
- ein erster Brückenbereich (26) der Brückenbereiche (26, 27) außen eine Einkerbung (23) für die funktionale Verbindung mit einer Steuereinheit (30) aufweist und
- ein zweiter Brückenbereich (27) der Brückenbereiche (26, 27) außen eine der außen liegenden Einkerbung (23) diametral entgegengesetzte ebene Fläche (24) aufweist,
wobei die Dicke t der Halbschalen (25) im Wesentlichen der Dicke t' der den Kanal (22) von der ebenen Fläche (24) trennenden Wand entspricht.

2. Kugel (20) nach Anspruch 1, bei der die Durchgangsöffnung (21) eine erste endseitige Öffnung (221) und eine zweite endseitige Öffnung (222) hat.

3. Kugel (20) nach Anspruch 2, bei welcher der Schnitt der Durchgangsöffnung (21) einen kurzen nahe der ersten endseitigen Öffnung (221) konstanten Abschnitt (211) hat, dann zu der Mitte des Kanals (22) hin zunimmt und schließlich zu der zweiten endseitigen Öffnung (222) hin abnimmt, wo er einen weiteren kurzen konstanten Abschnitt (212) hat.

4. Kugel (20) nach Anspruch 2 oder 3, bei welcher der Schnitt der Durchgangsöffnung (21) in seinem mittigen Bereich, die zwei kurzen konstanten Abschnitte (211, 212) ausgenommen, einen Kreisbogen (220) beschreibt.

5. Kugel (20) nach einem der vorstehenden Ansprüche, die zusätzlich eine zu der X-Achse der Durchgangsöffnung (21) senkrechte und durch die Mitte der Einkerbung (23) verlaufende Y-Achse aufweist.

6. Kugel (20) nach dem vorstehenden Anspruch, bei welcher sich der Schnitt der Durchgangsöffnung (21) in der zu der X-Achse und der Y-Achse senkrechten Richtung ändert.

7. Kugel (20) nach Anspruch 5 oder 6, bei welcher der Schnitt der Durchgangsöffnung (21) in der zu der X-Achse senkrechten und zu der Y-Achse parallelen Richtung konstant ist.

8. Kugel (20) nach einem der vorstehenden Ansprüche, bei welcher die beiden Halbschalen (25) innerhalb eine doppelte Krümmung haben.

9. Kugel (20) nach einem der vorstehenden Ansprüche, bei welcher die Brückenbereiche (26, 27) innerhalb eine einfache Krümmung haben.

10. Kugel (20) nach einem der vorstehenden Ansprüche, bei welcher die endgültige Festlegung der äußeren Oberfläche der Kugel (20) unmittelbar während des Formens des Polymers durchgeführt wird und kein zusätzliches Werkzeug erfordert.

11. Kugelventil (1) zum Steuern der Flüssigkeitsströmung in hydraulischen Systemen, mit einer Kugel (20) nach einem der vorstehenden Ansprüche.

12. Kugelventil (1) nach Anspruch 11, welches einen Ventilkörper (10) und eine Steuereinheit (30) aufweist.

13. Kugelventil (1) nach Anspruch 12, bei welchem der Ventilkörper (10) aus polymerem Material besteht.

14. Kugelventil (1) nach Anspruch 12 oder 13, bei welchem der Ventilkörper (10) Verbindungsmittel (11) für die Verbindung mit einem hydraulischen System aufweist.

15. Kugelventil (1) nach einem der Ansprüche 12 bis 14, bei welchem der Ventilkörper (10) eine Hülse (13) zur Aufnahme der Steuereinheit (30) aufweist.

16. Kugelventil (1) nach Anspruch 12, bei welchem die Steuereinheit (30) einen um eine Y'-Achse rotierenden Schaft (31) aufweist.

17. Kugelventil (1) nach Anspruch 16, bei welchem die Y'-Achse des Schafts (31) mit der X-Achse der Kugel (20) zusammenfällt.

18. Kugelventil (1) nach Anspruch 12, bei welchem die Steuereinheit (30) ein externes Betätigungselement aufweist, welches eines von einem Hebel, einem Griff, einem Rad und einem elektromechanischen Aktor ist.

19. Kugelventil (1) nach einem der Ansprüche 12 bis ***18***, bei welchem der Ventilkörper (10) zusätzlich Dichtelemente (12) aufweist, die für einen Kontakt zu der äußeren Oberfläche der Kugel (20) und ein Sicherstellen der Dichtung des Ventils (1) geeignet sind.

## Revendications

1. Bille (20) pour un robinet à bille (1) servant à contrôler l'écoulement de fluide dans les systèmes hydrauliques, ladite bille étant réalisée avec un matériau polymère et comprenant un trou traversant (21) définissant un conduit (22) pour ledit écoulement et définissant un axe X, **caractérisée en ce que** ledit trou traversant (21) a une section qui varie le long de l' axe X, dans laquelle :
ladite bille (20) est moulée d'un seul tenant ayant deux demi-coques (25) qui sont plus légères à l'intérieur et raccordées entre elles dans deux zones de pont diamétralement opposées (26, 27) et ayant une épaisseur constante t, excepté uniquement pour ces zones à proximité des ouvertures d'extrémité (221, 222) du trou (21) ;
une première zone de pont (26) desdites zones de pont (26, 27) comprend extérieurement une encoche (23) pour le couplage opérationnel avec une commande (30), et
une deuxième zone de pont (27) desdites zones de pont (26, 27) comprend extérieurement une surface plate (24) diamétralement opposée à l'encoche externe (23),
où l'épaisseur t des demi-coques (25) est sensiblement égale à l'épaisseur t' de la paroi séparant le conduit (22) de la surface plate (24).

2. Bille (20) conformément à la revendication 1, dans laquelle le trou (21) a une première ouverture d'extrémité (221) et une deuxième ouverture d'extrémité (222).

3. Bille (20) selon la revendication 2, dans laquelle la section du trou traversant (21) a une courte étendue (211) qui est constante à proximité de la première ouverture d'extrémité (221), augmentant ensuite vers le centre du conduit (22), et diminuant finalement vers la deuxième ouverture d'extrémité (222), où l'on trouve une autre courte étendue (212) constante.

4. Bille (20) selon les revendications 2 ou 3, dans laquelle la section du trou traversant (21) définit, dans sa surface centrale, et excluant les deux courtes étendues (211, 212) constantes, un arc de cercle (220).

5. Bille (20) selon l'une quelconque des revendications précédentes, comprenant en outre un axe Y perpendiculaire à l'axe X du trou (21) et passant par le centre de l'encoche (23).

6. Bille (20) selon la revendication précédente, dans laquelle la section du trou (21) change dans la direction perpendiculaire à la fois par rapport à l'axe X et par rapport à l'axe Y.

7. Bille (20) selon les revendications 5 ou 6, dans laquelle la section du trou (21) est constante dans la direction perpendiculaire à l'axe X et parallèle à l'axe Y.

8. Bille (20) selon l'une quelconque des revendications précédentes, dans laquelle les deux demi-coques (25) ont une double courbure à l'intérieur de ces dernières.

9. Bille (20) selon l'une quelconque des revendications précédentes, dans laquelle les zones de pont (26, 27) ont une seule courbure à l'intérieur de ces dernières.

10. Bille (20) selon l'une quelconque des revendications précédentes, dans laquelle la définition définitive de la surface externe de la bille (20) est directement réalisée alors que le polymère est moulé et ne nécessite pas d'outillage supplémentaire.

11. Robinet à bille (1) pour contrôler l'écoulement de fluide dans les systèmes hydrauliques, comprenant une bille (20) selon l'une quelconque des revendications précédentes.

12. Robinet à bille (1) selon la revendication précédente, comprenant un corps de robinet (10) et une commande (30).

13. Robinet à bille (1) selon la revendication 12, dans lequel ledit corps de robinet (10) est fabriqué en un matériau polymère.

14. Robinet à bille (1) selon les revendications 12 ou 13, dans lequel ledit corps de robinet (10) comprend des moyens (11) pour le raccordement avec un système hydraulique.

15. Robinet à bille (1) selon l'une quelconque des revendications 12 à 14, dans lequel ledit corps de robinet (10) comprend une tourelle (13) pour loger la commande (30).

16. Robinet à bille (1) selon la revendication 12, dans lequel la commande (30) comprend un arbre (31) pivotant autour d'un axe Y'.

17. Robinet à bille (1) selon la revendication précédente, dans lequel l'axe Y' de l'arbre (31) coïncide avec l'axe X de la bille (20).

18. Robinet à bille (1) selon la revendication 12, dans lequel la commande (30) comprend un actionneur externe choisi dans le groupe comprenant un levier, une poignée, une roue et un actionneur électromécanique.

19. Robinet à bille (1) selon l'une quelconque des revendications 12 à 18, dans lequel le corps de robinet (10) comprend en outre des éléments d'étanchéité (12) qui conviennent pour entrer en contact avec la surface externe de la bille (20) et garantir l'étanchéité du robinet (1).
